# EUROPEAN PATENT APPLICATION

(11) **EP 2 096 731 A2**
(43) Date of publication of application: **02.09.2009**
(21) Application number: 09153031.1
(22) Date of filing: 17.02.2009
(51) Int. Cl.: H02H 7/085, H02H 1/04, H02H 3/00, H02H 7/093

(54) **Opening-and-closing member control device**

(30) Priority: 28.02.2008 JP 2008047192
(71) Applicant: OMRON CORPORATION, Kyoto-shi, Kyoto 600-8530 (JP)
(72) Inventor: Takahashi, Tomohiro, Shiokoji-dori, Shimogyo-ku Kyoto-shi Kyoto 600-8530 (JP)
(74) Representative: Wilhelms · Kilian & Partner Patentanwälte

(57) **Abstract**

This invention provides an opening-and-closing member control device capable of detecting trapping and avoiding the trapping load from increasing without being influenced by disturbance. In an opening-and-closing control device for determining the presence of trapping of a foreign material at the window of a vehicle based on the comparison result of the motor load and the threshold value, the changing of the threshold value based on a second disturbance detection signal is prohibited if a first disturbance detection signal based on closing of the door is generated before the second disturbance detection signal based on fluctuation of the motor load, and the threshold value is increased for a predetermined time so that determination on the presence of trapping becomes difficult based on the second disturbance detection signal if the second disturbance detection signal is generated before the first disturbance detection signal.

## Description

### BACKGROUND OF THE INVENTION

### 1. TECHNICAL FIELD

The present invention relates to opening-and-closing member control devices such as an in-vehicle power window device, and in particular, to an opening-and-closing member control device having a foreign material trapping detecting function.

### 2. RELATED ART

The power window device mounted on a vehicle is a device for opening or closing the window by forward rotating or reverse rotating a motor through operation of a switch, and raising or lowering the window glass of a door. Generally, in such a power window device, when a foreign material is trapped in the window during the closing operation, the motor is reverse rotated after detection of trapping thereby switching the window to the opening operation, and avoiding the trapped object from being damaged. In the detection of trapping, the load of the motor (e.g., amount of change in rotation speed) is calculated based on the rotation speed of the motor, and the motor load is compared with a predetermined threshold value. Determination is made that trapping occurred if the load exceeds the threshold value since the motor load increases when trapping occurs.

However, the load of the motor fluctuates not only by the trapping of the foreign material, but also by vibration of when the door is closed, vibration of the vehicle during traveling, or the like. When the load of the motor increases by vibration and exceeds the threshold value, erroneous determination that the foreign material is trapped may be made although the foreign material is not actually trapped, and the window may open. That is, false operation occurs in opening and closing of the window due to disturbance.

Various proposals have conventionally been made to prevent erroneous determination of trapping by disturbance. For instance, Japanese Patent No. 3156553 proposes a power window device in which the threshold value is set high for a constant time after detecting that the door is closed, so that speed fluctuation amount does not exceed the threshold value thereby preventing erroneous determination even if the rotation speed of the motor fluctuates by the vibration of when the door is closed, and the threshold value is returned to the original value after the constant time has elapsed from when the door is closed to perform the normal trapping detection. Similar technique is disclosed in Japanese Patent No. 3237519. Japanese Unexamined Patent Publication No. 2007-9413 proposes a power window device in which while the motor rotates by a predetermined rotation amount after the completion of the closing operation of the door is detected, the threshold value of the trapping determination is increased and the determination sensitivity of the foreign material trapping is desensitized to thereby suppress erroneous determination of trapping of the foreign material in time of the opening/closing operation of the door.

### SUMMARY

In the vehicle, disturbance caused when the door is closed normally occurs only once. Therefore, the possibility the trapping occurred is high if the fluctuation of the motor load is detected from the vibration of when the door is closed, and then the fluctuation of the motor load is again detected. When trapping occurs, the motor load is usually monotonously reduced from the relevant time point, but disturbance may be involved at the occurrence of trapping by various reasons. For instance, the disturbance occurs if the sliding property of the window glass degrades by freezing under low temperature and change over time of an opening/closing mechanism. The disturbance also occurs even if traveling is started immediately after closing the door. The threshold value may be changed for a predetermined period with respect to the disturbance caused when the door is closed so that detection of trapping is difficult to carry out thereby preventing erroneous determination as in Japanese Patent Nos. 3156553, 3237519, and Japanese Unexamined Patent Publication No. 2007-9413, but if trapping involving disturbance occurs after the predetermined period has elapsed and the threshold value is returned to the original value, trapping is not detected and the trapping load with respect to the trapped object increases if the threshold value is again changed based on such disturbance.

Since disturbance also occurs by vibration even while the vehicle is traveling such as when traveling on a rough road (unpaved dirt road, bumpy road, etc.), the erroneous determination of trapping can be avoided by changing the threshold value based on the detection of disturbance. Furthermore, since disturbance based on stopping occurs when the vehicle stops, the erroneous determination can be avoided by detecting such disturbance and similarly changing the threshold value. The disturbance caused by the stopping of the vehicle normally occurs only once, and thus the possibility the trapping occurred is high if the fluctuation of the motor load is detected thereafter. Therefore, if the trapping involves disturbance, the trapping is not detected and the trapping load increases if the threshold value is changed with respect to such disturbance.

An object of the present invention is to provide an opening-and-closing member control device capable of detecting trapping and avoiding the trapping load from increasing without being influenced by disturbance.

In accordance with one aspect of the present invention, an opening-and-closing member control device according to the present invention relates to an opening-and-closing member control device including speed detection means for detecting a rotation speed of a motor for driving an opening-and-closing member arranged in a vehicle; load calculation means for calculating a motor load based on the rotation speed detected by the speed detection means; determination means for comparing the motor load calculated by the load calculation means and a threshold value, and determining presence of trapping of a foreign material at the opening-and-closing member based on the comparison result; the opening-and-closing member control device further including first disturbance detection means for detecting disturbance based on a state of the vehicle; second disturbance detection means for detecting disturbance based on the detection result of the speed detection means; and threshold value changing means for changing the threshold value so that determination on the presence of trapping by the determination means becomes difficult. The threshold value changing means prohibits changing of the threshold value based on the detection of disturbance by the second disturbance detection means if the first disturbance detection means detects the disturbance before the second disturbance detection means, and changes the threshold value for a predetermined time based on the detection of disturbance by the second disturbance detection means if the second detection disturbance means detects the disturbance before the first disturbance detection means.

According to such a configuration, if the second disturbance is generated after the first disturbance based on the state of the vehicle (e.g., closing of the door) is generated, the changing of the threshold value based on the second disturbance is prohibited, and thus trapping based on the normal threshold value can be detected with respect to the trapping involving the second disturbance. Thus, the trapping load on the trapped object reduces, and the object is avoided from being damaged. If the second disturbance is generated before the first disturbance, on the other hand, the threshold value is changed assuming the second disturbance is not the disturbance involved in the trapping so that trapping becomes difficult to detect, whereby erroneous determination of the trapping based on the second disturbance can be avoided.

In the above opening-and-closing control device, the threshold value changing means may be configured to change the threshold value based on the detection of disturbance by the first disturbance detection means.

Thus, the threshold value is changed so that the trapping becomes difficult to detect even if the motor load fluctuates by the first disturbance, whereby erroneous determination of the trapping based on the first disturbance can be avoided.

In accordance with another aspect of the present invention, in another opening-and-closing member control device according to the present invention, the threshold value changing means changes the threshold value for a predetermined time if the second disturbance detection means first detects the disturbance while the first disturbance detection means does not detect the disturbance, and prohibits changing of the threshold value if the second disturbance detection means detects the disturbance after the threshold value is changed.

According to such a configuration, if the second disturbance is first detected without the first disturbance based on the state of the vehicle (travel, stop etc.) generated, the second disturbance is not assumed as the disturbance caused by trapping, and the threshold value is changed so that the trapping becomes difficult to detect, whereby erroneous determination of the trapping based on the second disturbance can be avoided. If the second disturbance is again detected after the threshold value is changed, the changing of the threshold value is prohibited, so that the trapping can be detected based on the normal threshold value with respect to the trapping involving the second disturbance. Thus, the trapping load on the trapped object can be reduced, and the object is avoided from being damaged.

In such a another opening-and-closing member control device, there is further arranged sensitivity changing means for changing detection sensitivity so that the second disturbance detection means easily detects the disturbance; where the sensitivity changing means changes the detection sensitivity when the first disturbance detection means detects the disturbance.

According to such a configuration, the detection sensitivity is changed so that the second disturbance is easily detected when the first disturbance is detected, and thus the threshold value is changed based on the second disturbance so that the trapping becomes difficult to detect, whereby erroneous determination of the trapping based on the second disturbance can be avoided.

According to the present invention, there is provided an opening-and-closing member control device of higher safety in which increase in the trapping load with respect to the trapped object is avoided since the trapping is detected without being influenced by disturbance.

### BRIEF DESCRIPTION OF THE DRAWINGS

Fig. 1 is a block diagram showing an electrical configuration of a power window device according to a first embodiment of the present invention;
Fig. 2 is a schematic configuration view showing one example of an operation switch;
Fig. 3 is a view showing one example of a window opening-and-closing mechanism;
Fig. 4 is a view showing a state in which an object is trapped in the window;
Fig. 5 is a timing chart describing a trapping detecting operation in the first embodiment;
Fig. 6 is a timing chart describing the trapping detecting operation in the first embodiment;
Fig. 7 is a flowchart showing a basic operation of the power window device;
Fig. 8 is a flowchart describing the detailed procedure of a manual closing process;
Fig. 9 is a flowchart describing the detailed procedure of an auto closing process in the first embodiment;
Fig. 10 is a flowchart describing the detailed procedure of a first threshold value changing process;
Fig. 11 is a flowchart describing the detailed procedure of a manual opening process;
Fig. 12 is a flowchart describing the detailed procedure of an auto opening process;
Fig. 13 is a block diagram showing an electrical configuration of a power window device according to a second embodiment of the present invention;
Fig. 14 is a timing chart describing the trapping detecting operation in the second embodiment;
Fig. 15 is a flowchart describing the detailed procedure of the auto closing process in the second embodiment;
Fig. 16 is a flowchart describing the detailed procedure of a second threshold value changing process;
Fig. 17 is a flowchart describing the detailed procedure of the auto closing process in a third embodiment; and
Fig. 18 is a flowchart describing the detailed procedure of a third threshold value changing process.

### DETAILED DESCRIPTION

Hereinafter, exemplary embodiments of the present invention will be described with reference to the drawings.

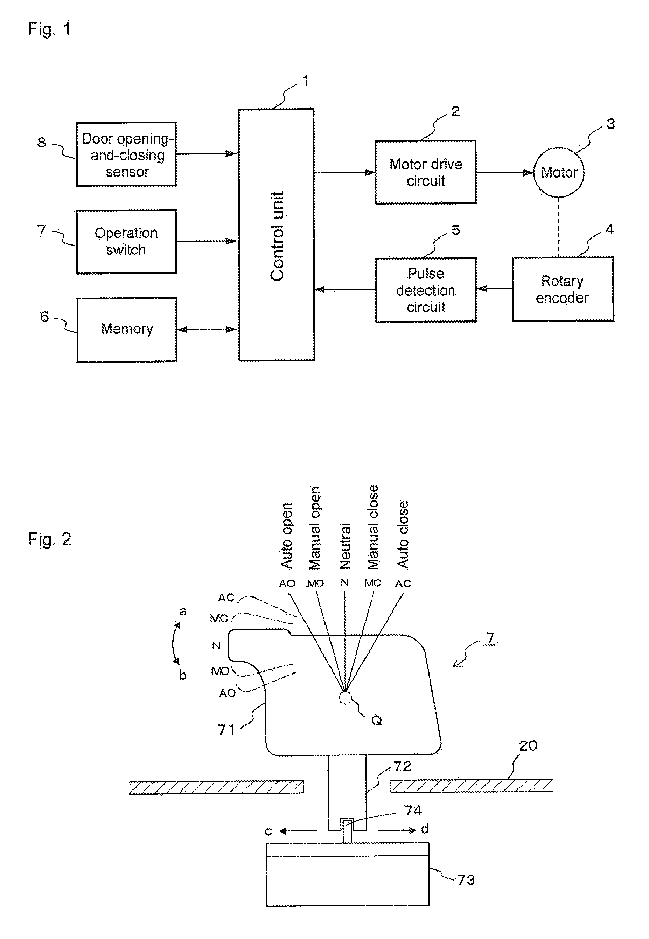

Fig. 1 is a block diagram showing an electrical configuration of a power window device according to a first embodiment of the present invention. 1 is a control unit including a CPU for controlling the opening/closing operation of the window, 2 is a motor drive circuit for driving a motor 3, 4 is a rotary encoder for outputting a pulse synchronized with the rotation of the motor 3, 5 is a pulse detection circuit for detecting the pulse output from the rotary encoder 4, 6 is a memory configured by a ROM, a RAM, or the like, 7 is an operation switch for operating the opening/closing of the window, and 8 is a door opening-and-closing sensor for detecting the opening/closing of the door.

In the above configuration, the rotary encoder 4 and the pulse detection circuit 5 serve as speed detection means in the present invention, the door opening-and-closing sensor 8 serves as first disturbance detection means in the present invention, and the control unit 1 serves as second disturbance detection means, load calculation means, determination means, threshold value changing means, and sensitivity changing means in the present invention.

When the operation switch 7 is operated, a window opening-and-closing command is provided to the control unit 1, and the motor 3 is forward rotated or reverse rotated by the motor drive circuit 2. The window opening-and-closing mechanism operating in conjunction with the motor 3 operates to opening-and-closing the window by the rotation of the motor 3. The pulse detection circuit 5 detects the pulse output from the rotary encoder 4, and the control unit 1 calculates the rotation speed of the motor and the movement distance of the window based on such a detection result and controls the rotation of the motor 3 through the motor drive circuit 2.

Fig. 2 is a schematic configuration view showing one example of the operation switch 7. The operation switch 7 is configured by an operation knob 71 rotatable in an ab direction with a shaft Q as a center, a rod 72 integrally arranged with the operation knob 71, and a known slide switch 73. 74 is an actuator of the slide switch 73, and 20 is a cover of a switch unit incorporating the operation switch 7. The lower end of the rod 72 is engaged with the actuator 74 of the slide switch 73, so that when the operation knob 71 is rotated in the ab direction, the actuator 74 moves in a cd direction through the rod 72, and a contacting point (not shown) of the slide switch 73 switches according to the moved position.

The operation knob 71 can be switched to each position of auto close AC, manual close MC, neutral N, manual open MO, and auto open AO. Fig. 2 shows a state in which the operation knob 71 is at the neutral N position. When the operation knob 71 is rotated from such a position by a constant amount in the a direction to be at the manual close MC position, the manual closing operation in which the window is closed through the manual operation is performed, and when the operation knob 71 is further rotated in the a direction from such a position to be at the auto close AC position, the auto closing operation in which the window is closed through the auto operation is performed. When the operation knob 71 is rotated from the neutral N position by a constant amount in the b direction to be at the manual open MO position, the manual opening operation in which the window is opened through the manual operation is performed, and when the operation knob 71 is further rotated in the b direction from such a position to be at the auto open AO position, the auto opening operation in which the window is opened through the auto operation is performed. A spring (not shown) is arranged in the operation knob 71, so that the operation knob 71 returns to the neutral N position by the force of the spring when the hand is released from the rotated operation knob 71.

In the manual operation, the closing operation or the opening operation of the window is performed while the operation knob 71 is continuously held at the position of manual close MC or manual open MO by hand, and the closing operation or the opening operation of the window is stopped when the hand is released from the operation knob 71 and the knob returns to the neutral N position. In the auto operation, once the operation knob 71 is rotated to the position of auto close AC or auto open AO, the closing operation or the opening operation of the window is continuously performed even if the hand is released from the operation knob 71 and the knob returns to the neutral N position.

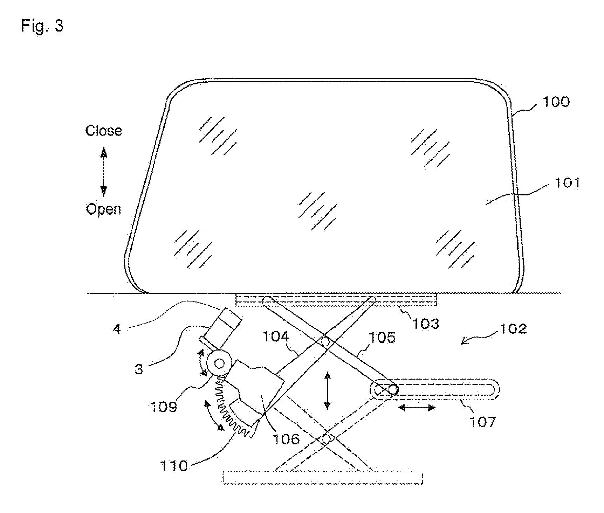

Fig. 3 is a view showing one example of the window opening-and-closing mechanism arranged on each window of the vehicle. 100 is a window of the automobile, 101 is a window glass for opening/closing the window 100, and 102 is a window opening-and-closing mechanism. The window glass 101 performs rising/lowering operation by the operation of the window opening-and-closing mechanism 102, where the window 100 closes by the rising of the window glass 101 and the window 100 opens by the lowering of the window glass 101. In the window opening-and-closing mechanism 102, 103 is a support member attached to the lower end of the window glass 101. 104 is a first arm having one end engaged to the support member 103 and the other end rotatably supported at a bracket 106, and 105 is a second arm having one end engaged to the support member 103 and the other end engaged to a guide member 107. The first arm 104 and the second arm 105 are coupled at an intermediate part by way of a shaft. 3 is the motor, and 4 is the rotary encoder. The rotary encoder 4 is coupled to a rotation shaft of the motor 3, and outputs a pulse corresponding to the rotation of the motor 3. The rotation speed of the motor 3 can be detected by counting the frequency or the cycle of the pulse. The rotation amount (movement amount of the window glass 101) of the motor 3 can be calculated from the output of the rotary encoder 4.

109 is a pinion rotatably driven by the motor 3, and 110 is a fan-shaped gear that gears with the pinion 109 and rotates. The gear 110 is fixed to the first arm 104. The motor 3 is rotatable in the forward/reverse direction, where the pinion 109 and the gear 110 are rotated by the rotation in the forward/reverse direction to thereby turn the first arm 104 in the forward/reverse direction. Following thereto, the other end of the second arm 105 slides in the horizontal direction along a groove of the guide member 107, whereby the support member 103 moves in the up and down direction thereby raising/lowering the window glass 101 and opening/closing the window 100.

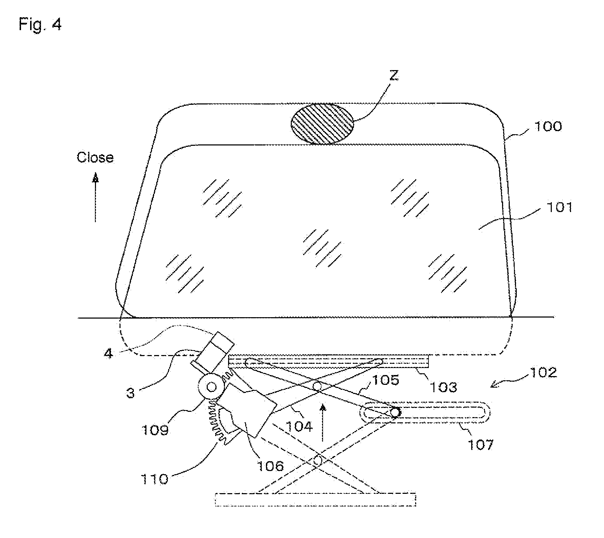

In such a power window device, a function of detecting trapping of an object is provided when the operation knob 71 is at the position of manual close MC or auto close AC of Fig. 2 and the manual closing operation or the auto closing operation is performed. That is, as shown in Fig. 4, when an object Z gets trapped in a gap of the window glass 101 while closing the window 100, the trapping is detected, and the closing operation of the window 100 is switched to the opening operation. In the detection of trapping, the motor load is calculated based on the rotation speed of the motor 3, and such a motor load is compared with a threshold value to determine the presence of trapping. The motor load is expressed with, for example, amount of change in rotation speed. When the object Z is trapped in the window 100, the load of the motor 3 increases and the rotation speed lowers, and thus the amount of change in speed becomes large, and determination is made that the object Z is trapped when the amount of change in speed exceeds a predetermined threshold value. The threshold value is stored in advance in the memory 6 (Fig. 1).

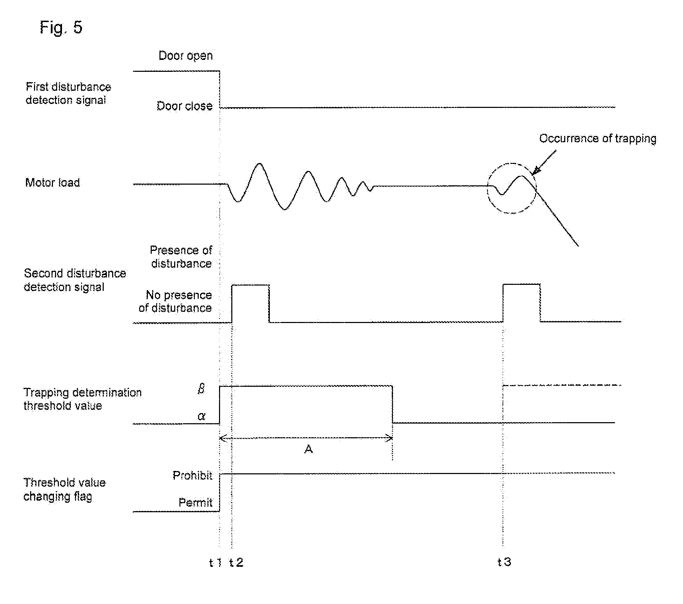

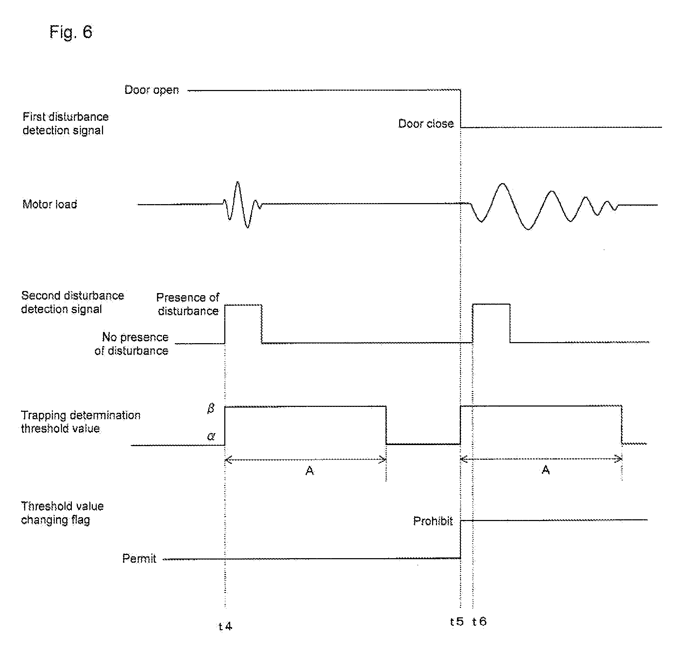

The detecting operation of trapping in the first embodiment will now be described with reference to Figs. 5 and 6. In the figures, a first disturbance detection signal is an output signal of the door opening-and-closing sensor 8 (Fig. 1), and includes a binary signal representing door open and door close. The motor load is the amount of change in rotation speed of the motor 3, and is calculated in the control unit 1 based on the detection signal of the pulse detection circuit 5 which detects the output pulse of the rotary encoder 4. A second disturbance detection signal is a signal generated in the control unit 1 when fluctuation of the motor load is detected. A trapping determination threshold value (hereinafter simply referred to as a "threshold value") is stored in the memory 6, as described above, and takes a value of either α (normal value) or β (changed value). Here, α and β are in a relationship of α < β. A threshold value changing flag is a flag specifying whether to permit or prohibit the threshold value to be changed (change from α to β), and is set by the control unit 1. In the figures, t1 to t6 represent time.

Fig. 5 shows a case where the first disturbance detection signal is generated before the second disturbance detection signal (t1 < t2), that is, when the door opening-and-closing sensor 8 detects closing of the door (first disturbance) before the fluctuation of the motor load (second disturbance) is detected. Vibration generates at the door when the door is forcibly closed, and the load of the motor 3 arranged at the door fluctuates based on the vibration. In this case, the threshold value is changed from α to β for a predetermined time A based on the first disturbance detection signal, and the threshold value changing flag is set to "prohibit". When the threshold value is changed from α to β, the threshold value becomes large and determination on the presence of trapping becomes difficult to make, and thus erroneous determination of determining the disturbance caused by the vibration when the door is closed as trapping can be avoided.

Since the disturbance caused when the door is closed normally occurs only once, as mentioned above, the fluctuation of the motor load that occurs after the predetermined time A has elapsed and the threshold value is returned to α has a high possibility of being caused by the trapping. In Fig. 5, the trapping involving disturbance occurs at t3, and the second disturbance detection signal is generated based on such disturbance. In this case, if the threshold value is changed to β as shown with a broken line, the threshold value increases and the trapping detection is not performed, the trapping load with respect to the trapped object increases, and the object may be damaged. In the present invention, the threshold value changing flag is set to "prohibit" at the time point of t3, and thus changing of the threshold value based on the second disturbance detection signal is not carried out. Therefore, the threshold value is maintained at α, and normal trapping detection based on the threshold value α is performed. Therefore, since the motor 3 reverse rotates by the trapping detection and opens the window, the trapping load with respect to the trapped object reduces, and the object is avoided from being damaged.

Fig. 6 shows a case where the second disturbance detection signal is generated before the first disturbance detection signal (t4 < t5), that is, when the fluctuation of the motor load (second disturbance) is detected before the door opening-and-closing sensor 8 detects the closing of the door (first disturbance). The trapping normally does not occur in a state the door is opened, and thus the second disturbance in this case is assumed to be from factors other than trapping. For instance, if the trunk at the rear part of the vehicle is closed with the door opened, this becomes a disturbance and causes fluctuation in the motor load. The threshold value is then changed from α to β for a predetermined time A based on the second disturbance detection signal. The threshold value changing flag is maintained in the permitted state at this time point. When the threshold value is changed from α to β, the threshold value becomes large and the determination on the presence of trapping becomes difficult to make, and thus erroneous determination of determining the disturbance by the vibration when the trunk is closed, and the like as trapping is avoided. The operation after the door is closed at t5 after the predetermined time A has elapsed and the threshold value is returned to α is the same as Fig. 5.

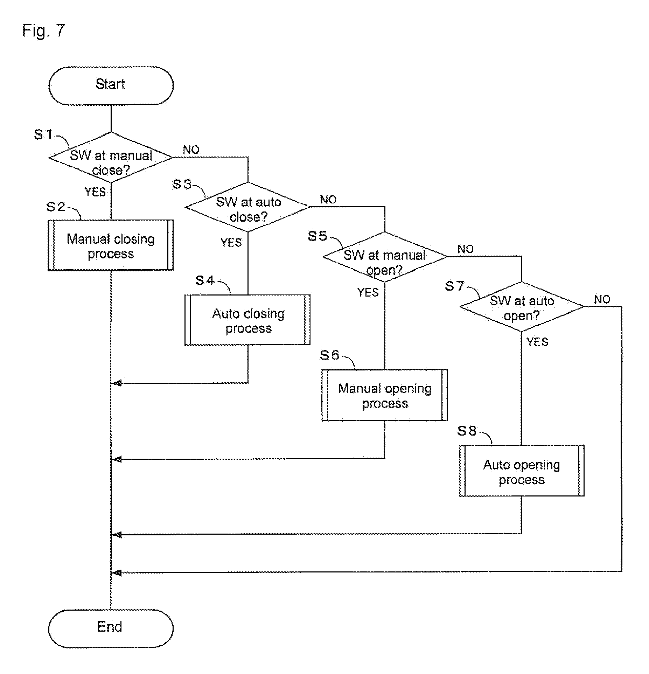

Fig. 7 is a flowchart showing the basic operation of the power window device according to the first embodiment. In the figure, "SW" refers to the "operation switch 7" (same in the following flowchart). The process of the manual closing operation is performed (step S2) if the operation switch 7 is at the position of manual close MC in step S1, the process of auto closing operation is performed (step S4) if the operation switch 7 is at the position of auto close AC in step S3, the process of manual opening operation is performed (step S6) if the operation switch 7 is at the position of manual open MO in step S5, and the process of auto opening operation is performed (step S8) if the operation switch 7 is at the position of auto open AO in step S7. Furthermore, if the operation switch 7 is not at the position of auto open AO in step S7, the operation switch 7 is at the neutral N position, and no process is performed. The details of steps S2, S4, S6, and S8 will be described in order below.

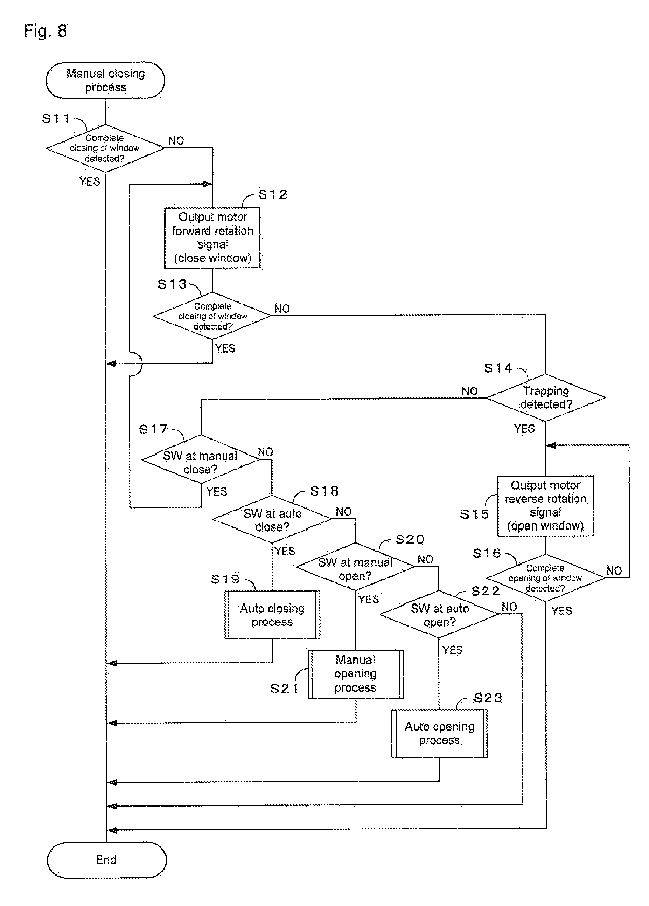

Fig. 8 shows a detailed procedure of the "manual closing process" in step S2 of Fig. 7. This processing procedure is no different from the related art. The procedure of Fig. 8 is executed by the CPU configuring the control unit 1 (same for the following procedures). First, whether or not the window 100 is completely closed by the manual closing operation is determined based on the output of the rotary encoder 4 (step S11). The process is terminated if the window 100 is completely closed (step S11: YES), and if not completely closed (step S11: NO), a forward rotation signal is output from the motor drive circuit 2 to forward rotate the motor 3 thereby closing the window 100 (step S12). Then, whether or not the window 100 is completely closed is determined (step S13), where the process is terminated if completely closed (step S13: YES), and whether or not trapping is detected is determined (step S14) if not completely closed (step S13: NO).

If trapping of the object Z occurred as shown in Fig. 4 (step S14: YES), a reverse rotation signal is output from the motor drive circuit 2 to reverse rotate the motor 3 thereby opening the window 100 (step S15). The trapping is thereby resolved. Whether or not the window 100 is completely opened is then determined (step S16), where the process is terminated if completely opened (step S16: YES) and the process returns to step S15 to continue the reverse rotation of the motor 3 if not completely opened (step S16: NO). Instead of reverse rotating the motor 3 and opening the window 100, the motor 3 may be stopped so that the window 100 does not close any further.

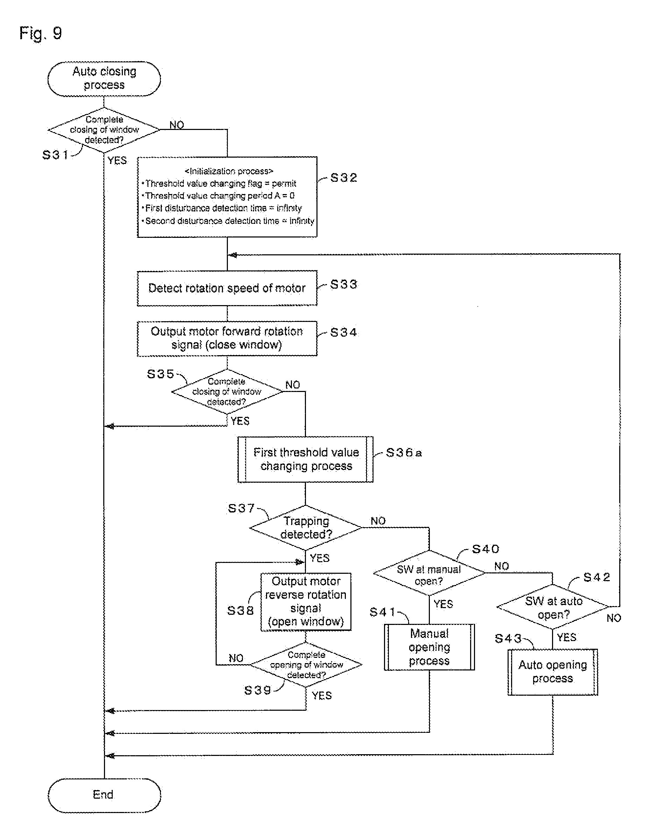

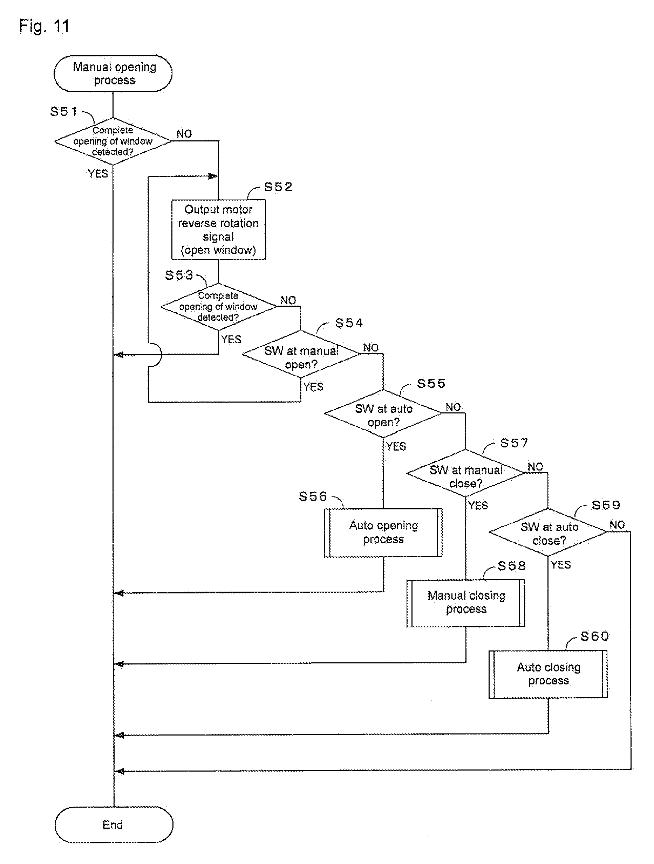

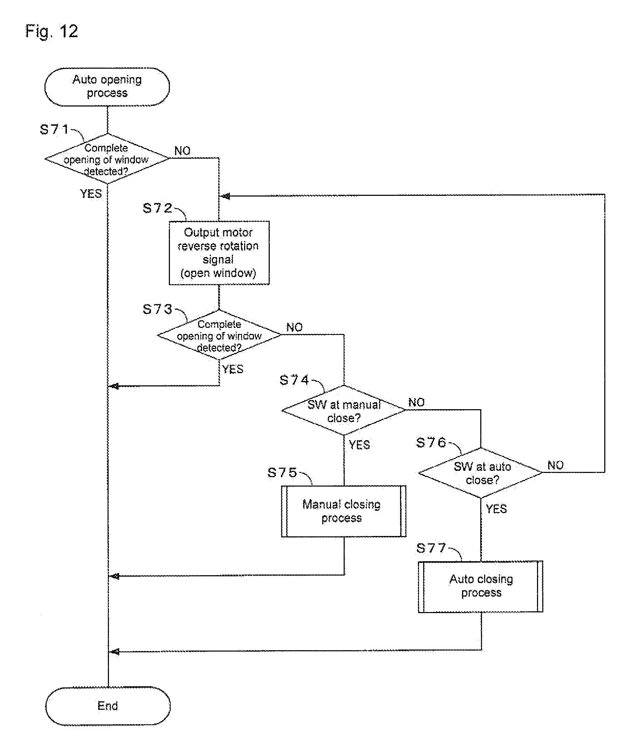

If trapping is not detected in step S14 (step S14: NO), whether or not the operation switch 7 is at the position of manual close MC is determined (step S17). The process returns to step S12 and continues the forward rotation of the motor 3 if the operation switch 7 is at the position of manual close MC (step S17: YES), and whether or not at the position of auto close AC is determined (step S18) if not at the position of manual close MC (step S17: NO). The process proceeds to the auto closing process to be hereinafter described (Fig. 9) (step S19) if the operation switch 7 is at the position of auto close AC (step S18: YES), and whether or not at the position of manual open MO is determined (step S20) if not at the position of auto close AC (step S18: NO). The process proceeds to the manual opening process to be hereinafter described (Fig. 11) (step S21) if the operation switch 7 is at the position of manual open MO (step S20: YES), and whether or not at the position of auto open AO is determined (step S22) if not at the position of manual open MO (step S20: NO). The process proceeds to the auto opening process to be hereinafter described (Fig. 12) (step S23) if the operation switch 7 is at the position of auto open AO (step S22: YES), and the process is terminated without performing any process if the operation switch 7 is not at the position of auto open AO (step S22: NO).

Fig. 9 shows a detailed procedure of the "auto closing process" in step S4 of Fig. 7. This processing procedure (particularly, steps S32, S36a) are features of the present invention. First, whether or not the window 100 is completely closed by the auto closing operation is determined based on the output of the rotary encoder 4 (step S31). The process is terminated if the window 100 is completely closed (step S31: YES), and the process proceeds to step S32 if not completely closed (step S31: NO).

In step S32, the initialization process is performed on each parameter stored in a predetermined region of the memory 6. That is, the threshold value changing flag is set to "permit", the threshold value changing period A is set to "0", the first disturbance detection time is set to "infinity", and the second disturbance detection time is set to "infinity". These are all initial values.

The process then proceeds to step S33 to detect the rotation speed of the motor 3 based on the output of the rotary encoder 4, and thereafter, the forward rotation signal is output to the motor drive circuit 2 to forward rotate the motor 3 and close the window 100 (step S34). Subsequently, whether or not the window 100 is completely closed is determined (step S35), where the process is terminated if completely closed (step S35: YES), and the process proceeds to step S36a if not completely closed (step S35: NO).

In step S36a, a first threshold value changing process is executed. The details of this process will be hereinafter described. Thereafter, the process proceeds to step S37 to determine whether or not trapping is detected, where the reverse rotation signal is output from the motor drive circuit 2 to reverse rotate the motor 3 and open the window 100 (step S38) if trapping is detected (step S37: YES). The trapping is thereby resolved. Whether or not the window 100 is completely opened is determined (step S39), where the process is terminated if completely opened (step S39: YES), and the process returns to step S38 to continue the reverse rotation of the motor 3 if not completely opened (step S39: NO). Instead of reverse rotating the motor 3 and opening the window 100, the motor 3 may be stopped so that the window 100 does not close any further.

If trapping is not detected in step S37 (step S37: NO), whether or not the operation switch 7 is at the position of manual open MO is determined (step S40). The process proceeds to a manual opening process (step S41) to be hereinafter described (Fig. 11) if the operation switch 7 is at the position of manual open MO (step S40: YES), and whether or not at the position of auto open AO is determined (step S42) if not at the position of manual open MO (step S40: NO). The process proceeds to an auto opening process (step S43) to be hereinafter described (Fig. 12) if the operation switch 7 is at the position of auto open AO (step S42: YES), and the process returns to step S33 to continue the detection of the rotation speed of the motor 3 if the operation switch 7 is not at the position of auto open AO (step S42: NO).

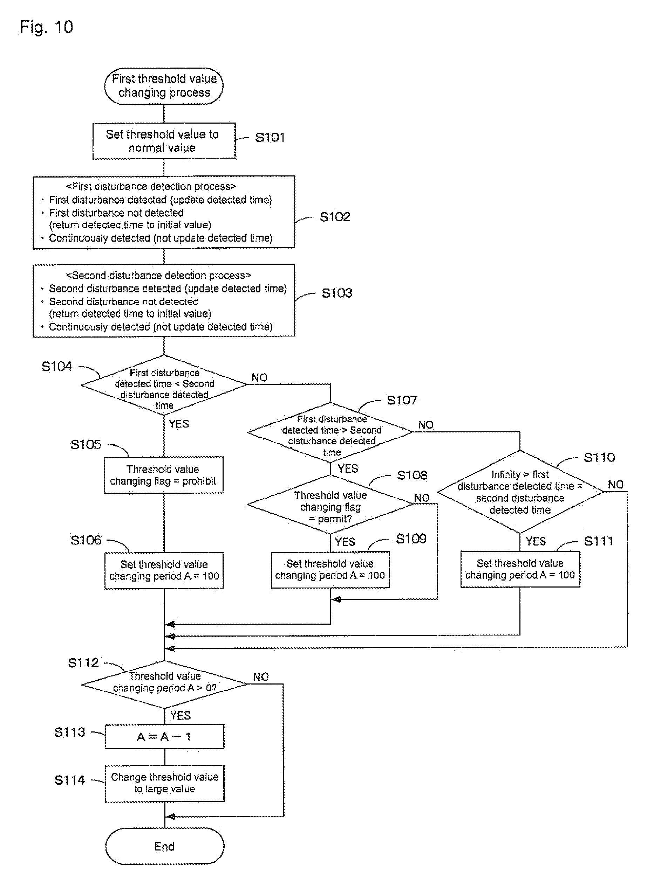

Fig. 10 shows a detailed procedure of the "first threshold value changing process" in step S36a of Fig. 9. First, after setting the threshold value to a normal value (i.e., α) in step S101, the process proceeds to step S102 to perform the first disturbance detection process. In this process, the presence of the first disturbance is detected based on the output of the door opening-and-closing sensor 8. If the door is closed and the first disturbance is detected, the detected time thereof is stored in the memory 6, and the detected time is updated. If the first disturbance is not detected, the detected time is returned to an initial value (infinity). If the first disturbance is continuously detected, the detected time is not updated, and the first disturbance detected time at the beginning is maintained.

The process then proceeds to step S103 to perform the second disturbance detection process. In this process, the presence of the second disturbance is detected based on the motor load calculated from the output of the rotary encoder 4. If the motor load fluctuates due to vibration of when the door is closed, freezing of the window at low temperature, and the like and the second disturbance is detected, the detected time thereof is stored in the memory 6, and the detected time is updated. If the second disturbance is not detected, the detected time is returned to an initial value (infinity). If the second disturbance is continuously detected, the detected time is not updated, and the second disturbance detected time at the beginning is maintained.

The process then proceeds to step S104, and whether or not the first disturbance is detected before the second disturbance is determined. If the first disturbance is detected before the second disturbance (step S104: YES), the threshold value changing flag is set to "prohibit" in step S105, the threshold value changing period A is set to A = 100 in step S106, and then the process proceeds to step S112. If the first disturbance is not detected before the second disturbance in step S104 (step S104: NO), the process proceeds to step S107, and whether or not the second disturbance is detected before the first disturbance is determined.

If the second disturbance is detected before the first disturbance (step S107: YES), whether or not the threshold value changing flag is set to "permit" is determined in step S108. If the threshold value changing flag is "permit" (step S108: YES), the threshold value changing period A is set to A = 100 in step S109, and then the process proceeds to step S112. If the threshold value changing flag is "prohibit" (step S108: NO), the process proceeds to step S112 without executing step S109. If the second disturbance is not detected before the first disturbance in step S107 (step S107: NO), the process proceeds to step S110, and whether or not the first disturbance and the second disturbance are simultaneously detected is determined.

If the first disturbance and the second disturbance are simultaneously detected (step S110: YES), the threshold value changing period A is set to A = 100 in step S111, and the process proceeds to step S112. If the first disturbance and the second disturbance are not simultaneously detected in step S110 (step S110: NO), the process proceeds to step S112 without executing step S111.

In step S112, whether or not the threshold value changing period A is A > 0 is determined. If A > 0 (step S112: YES), 1 is subtracted from A so that A = A-1 in step S113. The threshold value is then changed to a large value (i.e., β) in step S114, and the first threshold value changing process is terminated. If not A > 0 in step S112 (step S112: NO), that is, if A = 0, the first threshold value changing process is terminated without executing steps S113 and S114.

After the sub-routine shown in Fig. 10 is terminated once, the trapping detection process of step S37 of Fig. 9 is performed. As described in Fig. 9, the processes of steps S38 and S39 are executed if trapping is detected, and the processes of steps S40 to S43 are executed if trapping is not detected. If trapping is not detected and the operation switch 7 is not operated, the determinations of steps S37, S40, and S42 are all NO, and thus the first threshold value changing process of step S36a is again executed after steps S33 to S35. While the first threshold value changing process is being repeated, the threshold value changing period A is subtracted by 1 every time (step S113).

Fig. 11 shows the detailed procedures of the "manual opening process" of step S6 of Fig. 7, step S21 of Fig. 8, and step S41 of Fig. 9. The processing procedures are the same as the related art. First, whether or not the window 100 is completely opened by the manual opening operation is determined based on the output of the rotary encoder 4 (step S51). The process is terminated if the window 100 is completely opened (step S51: YES), and the reverse rotation signal is output from the motor drive circuit 2 to reverse rotate the motor 3 and open the window 100 (step S52) if not completely opened (step S51: NO). Thereafter, whether or not the window 100 is completely opened is determined (step S53), where the process is terminated if completely opened (step S53: YES), and whether or not the operation switch 7 is at the position of manual open MO is determined (step S54) if not completely opened (step S53: NO). The process returns to step S52 to continue the reverse rotation of the motor 3 if the operation switch 7 is at the position of manual open MO (step S54: YES), and whether or not at the position of auto open AO is determined (step S55) if not at the position of manual open MO (step S54: NO). The process proceeds to the auto opening process (step S56) to be hereinafter described (Fig. 12) if the operation switch 7 is at the position of auto open AO (step S55: YES), and whether or not at the position of manual close MC is determined (step S57) if not at the position of auto open AO (step S55: NO). The process proceeds to the manual closing process (step S58) described above (Fig. 8) if the operation switch 7 is at the position of manual close MC (step S57: YES), and whether or not at the position of auto close AC is determined (S59) if not at the position of manual close MC (step S57: NO). The process proceeds to the auto closing process (step S60) described above (Fig. 9) if the operation switch 7 is at the position of auto close AC (step S59: YES), and the process is terminated without performing any process if the operation switch 7 is not at the position of auto close AC (step S59: NO).

Fig. 12 shows the detailed procedures of the "auto opening process" of step S8 of Fig. 7, step S23 of Fig. 8, and step S43 of Fig. 9. The processing procedures are the same as the related art. First, whether or not the window 100 is completely opened by the auto opening operation is determined based on the output of the rotary encoder 4 (step S71). The process is terminated if the window 100 is completely opened (step S71: YES), and the reverse rotation signal is output from the motor drive circuit 2 to reverse rotate the motor 3 and open the window 100 (step S72) if not completely opened (step S71: NO). Thereafter, whether or not the window 100 is completely opened is determined (step S73), where the process is terminated if completely opened (step S73: YES), and whether or not the operation switch 7 is at the position of manual close MC is determined (step S74) if not completely opened (step S73: NO). The process proceeds to the manual closing process (step S75) described above (Fig. 8) if the operation switch 7 is at the position of manual close MC (step S74: YES), and whether or not at the position of auto close AC is determined (step S76) if not at the position of manual close MC (step S74: NO). The process proceeds to the auto closing process (step S77) described above (Fig. 9) if the operation switch 7 is at the position of auto close AC (step S76: YES), and the process returns to step S72 and the reverse rotation of the motor 3 is continued if the operation switch 7 is not at the position of auto close AC (step S76: NO).

In the first embodiment described above, the changing of the threshold value based on the second disturbance detection signal is prohibited (step S105 of Fig. 10) if the first disturbance detection signal based on the closing of the door is generated before the second disturbance detection signal based on the fluctuation of the motor load (Fig. 5), and thus trapping can be detected based on the normal threshold value α. Thus, the trapping load with respect to the trapped object is reduced to avoid damages on the object. Furthermore, in the embodiment described above, the threshold value is changed at the time point the first disturbance detection signal is generated (step S114), and thus presence of trapping will not be erroneously determined even if the motor load fluctuates by the vibration of closing the door. If the second disturbance detection signal is generated before the first disturbance detection signal (Fig. 6), on the other hand, the threshold value is changed (steps S108, S109, S112 to S114) assuming that the second disturbance is not the disturbance caused by trapping, whereby trapping becomes difficult to detect, and erroneous determination of trapping based on the second disturbance can be avoided.

In Japanese Patent Nos. 3156553 and 3237519, the threshold value is changed even when the door is weakly closed (motor load does not fluctuate and disturbance does not generate) and thus the trapping detection becomes difficult to perform, but in the first embodiment, the second disturbance is not detected if the door is weakly closed, and thus the changing of the threshold value based on the second disturbance detection signal is not performed. Thus, if trapping is found, the trapping is detected and the reverse control of the window is performed, whereby stability is enhanced compared to Japanese Patent Publication Nos. 3156553 and 3237519.

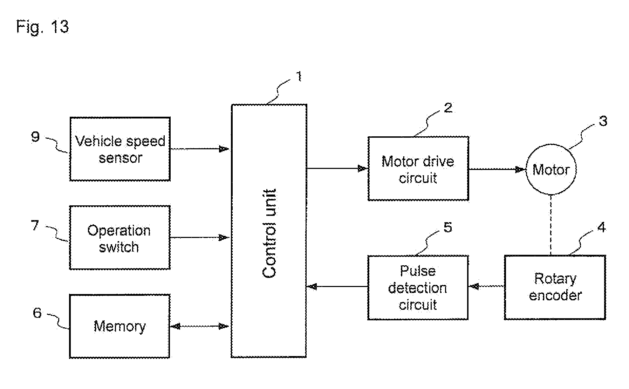

Fig. 13 is a block diagram showing an electrical configuration of the power window device according to a second embodiment of the present invention. In Fig. 13, the door opening-and-closing sensor 8 of Fig. 1 is replaced with a vehicle speed sensor 9. Others are the same as Fig. 1, and thus the same reference numerals are denoted for the same portions as Fig. 1 and the description thereof will not be given. The vehicle speed sensor 9 serves as first disturbance detection means in the present invention.

In the second embodiment, the configuration of the operation switch 7 is the same as Fig. 2, and the window opening-and-closing mechanism is the same as in Figs. 3 and 4, and thus the description thereof will not be given.

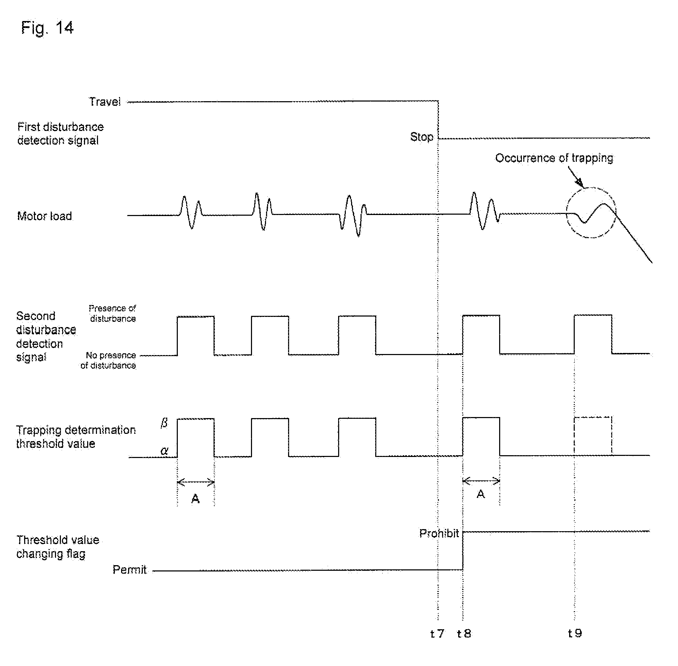

Fig. 14 is a timing chart for describing the trapping detecting operation in the second embodiment. In the figure, the first disturbance detection signal is a signal generated based on the output of the vehicle speed sensor 9, and includes a binary signal representing travel and stop. The motor load, the second disturbance detection signal, the trapping determination threshold value, and the threshold value changing flag are the same as described in Figs. 5 and 6. In the figure, t7 to t9 represent time. In Fig. 14, a state in which the vehicle is traveling (when output from the vehicle speed sensor 9 is made) is the state in which the first disturbance is detected, and a state in which the vehicle is stopped (when output from the vehicle speed sensor 9 is not made) is the state in which the first disturbance is not detected.

When the vehicle is traveling on a rough road, the second disturbance detection signal is generated based on the fluctuation of the motor load by the vibration of the vehicle body while the first disturbance detection signal is being output. In this case, the threshold value is changed from α to β for the predetermined time A based on the second disturbance detection signal. The threshold value changing flag is maintained in the permitted state at this time point. When the threshold value is changed from α to β, the threshold value becomes large and presence of trapping becomes difficult to determine, and thus the disturbance by the vibration caused by traveling on the rough road is avoided from being erroneously determined as trapping.

When the vehicle is stopped at t7, the first disturbance detection signal is not output, but the second disturbance detection signal is output at t8 immediately after stopping due to the fluctuation of the motor load in time of stopping. The second disturbance in this case is not caused by the trapping, and thus the threshold value is changed from α to β for the predetermined time A based on the second disturbance detection signal, and the threshold value changing flag is set to prohibit. When the threshold value is changed from α to β, the threshold value becomes large, and the second disturbance due to stopping of the vehicle is avoided from being erroneously determined as trapping.

Since the disturbance caused by the stopping of the vehicle is normally generated only once, the possibility of being the fluctuation due to trapping is high when the fluctuation of the motor load is thereafter again detected. In Fig. 14, the trapping involving disturbance is generated at t9, and the second disturbance detection signal is generated based on such disturbance. In this case, when the threshold value is changed to β as shown with a broken line, the threshold value increases and the trapping detection is not performed, the trapping load with respect to the trapped object increases, and the object may be damaged. In the present invention, the changing of the threshold value is prohibited after the threshold value is changed at t8 based on the first disturbance after the vehicle is stopped, and thus the changing of the threshold value based on the second disturbance detection signal is not performed at the time of t9 at which the threshold value changing flag is "prohibit". Thus, the threshold value is maintained at α, and the normal trapping detection based on the threshold value α is performed. Therefore, the motor 3 is reverse rotated by the trapping detection thereby opening the window, whereby the trapping load with respect to the trapped object is reduced and the object is avoided from being damaged.

The basic operation of the power window device according to the second embodiment is the same as the flowchart shown in Fig. 7. The "manual closing process" is the same as the flowchart shown in Fig. 8, the "manual opening process" is the same as the flowchart shown in Fig. 11, and the "auto opening process" is the same as the flowchart shown in Fig. 12. Therefore, the detailed description of such procedures will not be given.

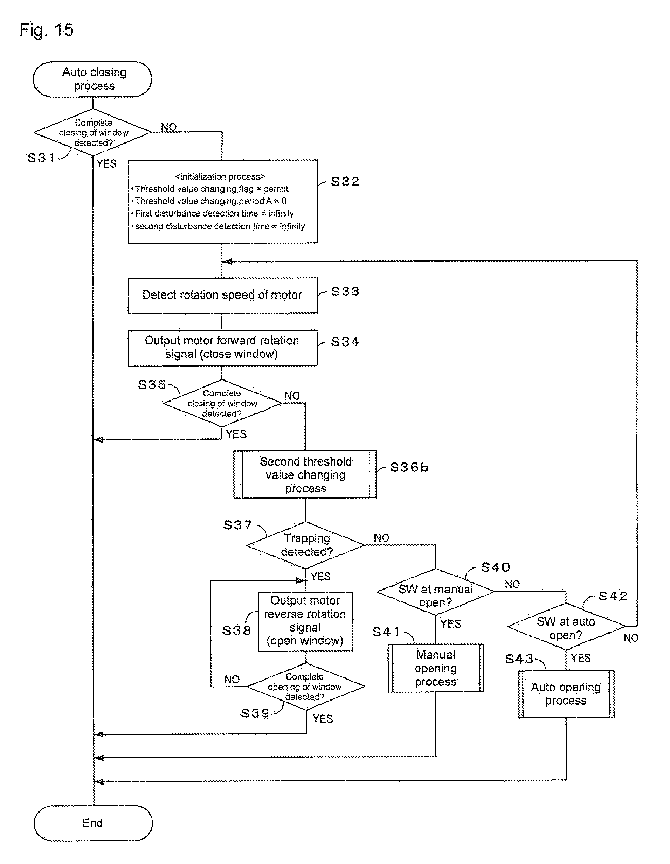

Fig. 15 shows the detailed procedures of the "auto closing process" (step S4 of Fig. 7) in the second embodiment. In Fig. 15, the first threshold value changing process of step S36a of Fig. 9 is merely replaced with a second threshold value changing process of step S36b, and other processes are the same as Fig. 9, and thus the same reference numerals are denoted for the steps executing the same process, and the description will not be given.

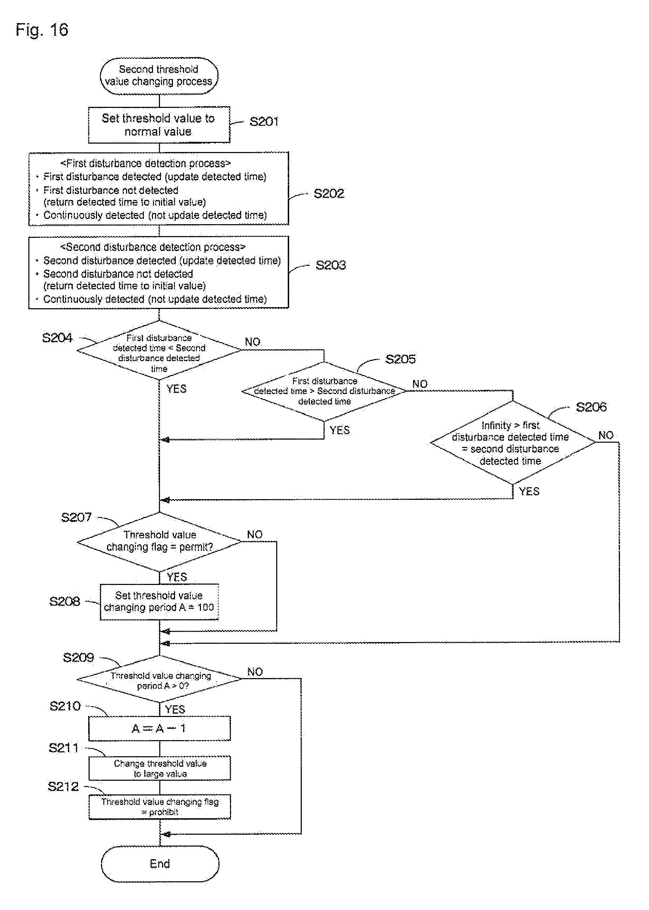

Fig. 16 shows the detailed procedures of the "second threshold value changing process" in step S36b of Fig. 15. First, after setting the threshold value to a normal value (i.e., α) in step S201, the process proceeds to step S202 to perform the first disturbance detection process. In this process, the presence of the first disturbance is detected based on the output of the vehicle speed sensor 9. If the vehicle is traveling and the first disturbance is detected, the detected time thereof is stored in the memory 6, and the detected time is updated. If the first disturbance is not detected, the detected time is returned to an initial value (infinity). If the first disturbance is continuously detected, the detected time is not updated, and the first disturbance detected time at the beginning is maintained.

The process then proceeds to step S203 to perform the second disturbance detection process. In this process, the presence of the second disturbance is detected based on the motor load calculated from the output of the rotary encoder 4. If the motor load fluctuates due to vibration of when the door is closed, freezing of the window at low temperature, and the like and the second disturbance is detected, the detected time thereof is stored in the memory 6, and the detected time is updated. If the second disturbance is not detected, the detected time is returned to an initial value (infinity). If the second disturbance is continuously detected, the detected time is not updated, and the second disturbance detected time at the beginning is maintained.

Whether or not one or both of the first disturbance and the second disturbance are detected is determined in steps S204 to S206. If the disturbance is detected (steps S204 to S206: YES), whether or not the threshold value changing flag is set to "permit" is determined in step S207. If the threshold value changing flag is "permit" (step S207: YES), the threshold value changing period A is set to A = 100 in step S208, and then the process proceeds to step S209. If the threshold value changing flag is "prohibit" (step S207: NO), the process proceeds to step S209 without executing step S208.

In step S209, whether or not the threshold value changing period A is A > 0 is determined. If A > 0 (step S209: YES), 1 is subtracted from A so that A = A-1 in step S210. The threshold value is then changed to a large value (i.e., β) in step S211, and the second threshold value changing process is terminated after setting the threshold value changing flag to "prohibit" in step S212. If not A > 0 in step S209 (step S209: NO), that is, if A = 0, the second threshold value changing process is terminated without executing steps S210 to S212.

After the sub-routine shown in Fig. 16 is terminated once, the trapping detection process of step S37 of Fig. 15 is performed. The processes of steps S38 and S39 are executed if trapping is detected, and the processes of steps S40 to S43 are executed if trapping is not detected. If trapping is not detected and the operation switch 7 is not operated, the determinations of steps S37, S40, and S42 are all NO, and thus the second threshold value changing process of step S36b is again executed after steps S33 to S35. While the second threshold value changing process is being repeated, the threshold value changing period A is subtracted by 1 every time (step S210).

In the second embodiment described above, when the second disturbance detection signal is generated first with the first disturbance detection signal not generated (vehicle stopped), the threshold value is changed (step S207: YES, step S209: YES, step S211) assuming that the second disturbance is not the disturbance caused by trapping, whereby trapping becomes difficult to detect, and erroneous determination of trapping based on the second disturbance can be avoided. If the second disturbance detection signal is again generated after the threshold value is changed, the changing of the threshold value is prohibited (step S207: NO, step S209: NO), so that the trapping can be detected based on the normal threshold value with respect to the trapping involving disturbance as in Fig. 14. Thus, the trapping load with respect to the trapped object is reduced, and the object is avoided from being damaged.

A third embodiment of the present invention will now be described. The electrical configuration of the power window device according to the third embodiment is the same as Fig. 13, the configuration of the operation switch 7 is the same as Fig. 2, and the window opening-and-closing mechanism is the same as Figs. 3 and 4, and thus the description thereof will not be given.

The basic operation of the power window device according to the third embodiment is the same as the flowchart shown in Fig. 7. The "manual closing process" is the same as the flowchart shown in Fig. 8, the "manual opening process" is the same as the flowchart shown in Fig. 11, and the "auto opening process" is the same as the flowchart shown in Fig. 12, Therefore, the detailed description of such procedures will not be given.

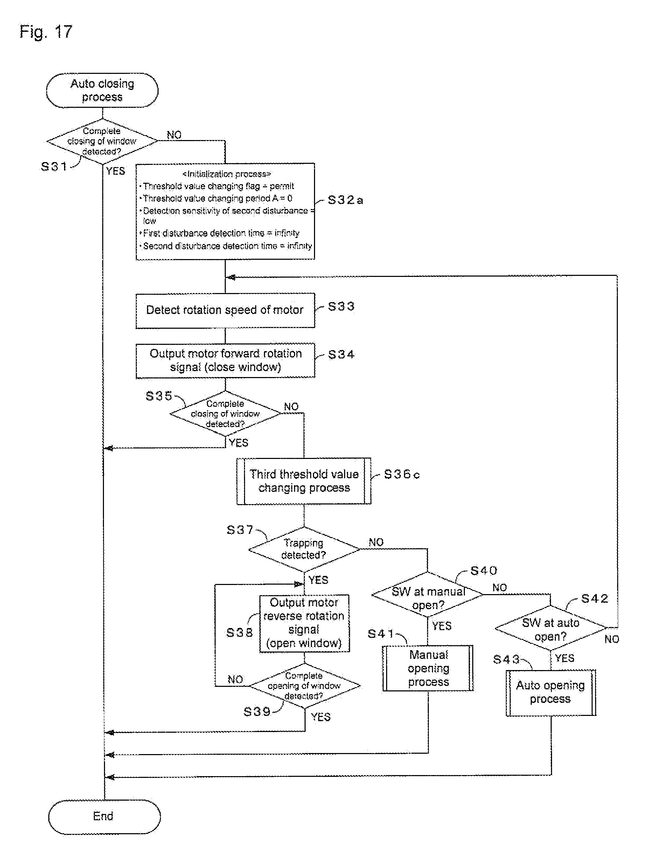

Fig. 17 shows the detailed procedures of the "auto closing process" (step S4 of Fig. 7) in the third embodiment. Fig. 17 is the same as Fig. 9 except that the detection sensitivity of the second disturbance is set to a low value in addition to the initial setting of each parameter in step S32 of Fig. 9 in the initialization process of step S32a, and that the first threshold value changing process of step S36a of Fig. 9 is replaced with a third threshold value changing process of step S36c, and thus the same reference numerals are denoted for steps executing the same process, and the description thereof will not be given.

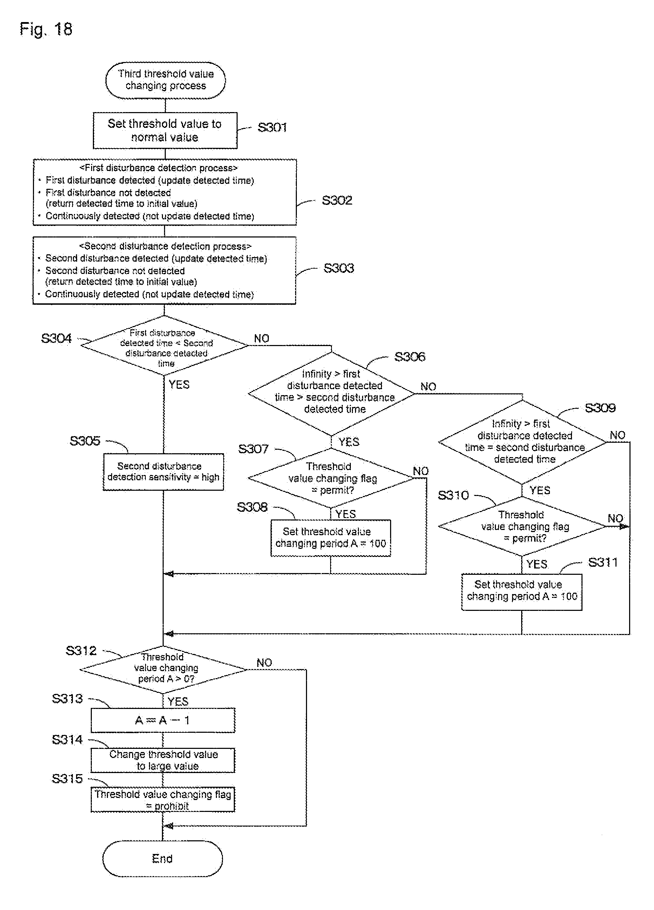

Fig. 18 shows a detailed procedure of the "third threshold value changing process" in step S36c of Fig. 17. First, after setting the threshold value to a normal value (i.e., α) in step S301, the process proceeds to step S302 to perform the first disturbance detection process. In this process, the presence of the first disturbance is detected based on the output of the vehicle speed sensor 9. If the vehicle is traveling and the first disturbance is detected, the detected time thereof is stored in the memory 6, and the detected time is updated. If the first disturbance is not detected, the detected time is returned to an initial value (infinity). If the first disturbance is continuously detected, the detected time is not updated, and the first disturbance detected time at the beginning is maintained.

The process then proceeds to step S303 to perform the second disturbance detection process. In this process, the presence of the second disturbance is detected based on the motor load calculated from the output of the rotary encoder 4. If the motor load fluctuates due to vibration of when the door is closed, freezing of the window at low temperature, and the like and the second disturbance is detected, the detected time thereof is stored in the memory 6, and the detected time is updated. If the second disturbance is not detected, the detected time is returned to an initial value (infinity). If the second disturbance is continuously detected, the detected time is not updated, and the second disturbance detected time at the beginning is maintained.

Whether or not one or both of the first disturbance and the second disturbance are detected is determined steps S304, S306, and S309. If the first disturbance is detected first in step S304 (step S304: YES), the process proceeds to step S305, the second disturbance detection sensitivity is set to a value higher than the normal value so that the second disturbance can be easily detected, and thereafter, the process proceeds to step S312. If the second disturbance is detected first in step S306 (step S306: YES), whether or not the threshold value changing flag is set to "permit" is determined in step S307. If the threshold value changing flag is "permit" (step S307: YES), the threshold value changing period A is set to A=100 in step S308, and then the process proceeds to step S312. If the threshold value changing flag is "prohibit" (step S307: NO), the process proceeds to step S312 without executing step S308. If the first disturbance and the second disturbance are simultaneously detected in step S309 (step S309: YES), whether or not the threshold value changing flag is set to "permit" is determined in step S310. If the threshold value changing flag is "permit" (step S310: YES), the threshold value changing period A is set to A = 100 in step S311, and then the process proceeds to step S312. If the threshold value changing flag is "prohibit" (step S310: NO), the process proceeds to step S312 without executing step S311. If neither disturbance is detected (steps S304: NO, S306: NO, S309: NO), the process proceeds to step S312.

In step S312, whether or not the threshold value changing period A is A > 0 is determined. If A > 0 (step S312: YES), 1 is subtracted from A so that A = A-1 in step S313. The threshold value is then changed to a large value (i.e., β) in step S314, and the third threshold value changing process is terminated after setting the threshold value changing flag to "prohibit" in step S315. If not A > 0 in step S312 (step S312: NO), that is, if A = 0, the third threshold value changing process is terminated without executing steps S313 to S315.

After the sub-routine shown in Fig. 18 is terminated once, the trapping detection process of step S37 of Fig. 17 is performed. The processes of steps S38 and S39 are executed if trapping is detected, and the processes of steps S40 to S43 are executed if trapping is not detected. If trapping is not detected and the operation switch 7 is not operated, the determination of steps S37, S40, and S42 are all NO, and thus the third threshold value changing process of step S36c is again executed after steps S33 to S35. While the third threshold value changing process is being repeated, the threshold value changing period A is subtracted by 1 every time (step S313).

In the third embodiment described above, the detection sensitivity of the second disturbance becomes high (step S305) when the first disturbance is detected, and thus slight vibration generated by traveling can be detected as the second disturbance in the case of the traveling (first disturbance) vehicle. Thus, the threshold value is changed from α to β based on the second disturbance so that the trapping becomes difficult to detect, whereby erroneous determination of trapping based on the second disturbance can be avoided.

In the embodiments described above, the rotation speed of the motor 3 is detected based on the frequency or the cycle of the pulse output from the rotary encoder 4, but instead, the rotation speed may be detected based on the value of the current flowing to the motor 3. In this case, a current detection circuit may be arranged as speed detection means.

In the embodiments described above, the window glass of the vehicle has been described for the opening-and-closing member by way of example, but the present invention can also be applied to the control of an opening-and-closing member such as a rear door or a sunroof of the vehicle.

## Claims

1. An opening-and-closing member control device comprising:
speed detection means (4, 5) for detecting a rotation speed of a motor (3) for driving an opening-and-closing member arranged in a vehicle;
load calculation means (1) for calculating a motor load based on the rotation speed detected by the speed detection means (4, 5); and
determination means (1) for comparing the motor load calculated by the load calculation means (1) and a threshold value, and determining presence of trapping of a foreign material at the opening-and-closing member based on the comparison result;
the opening-and-closing member control device further including,
first disturbance detection means (8, 9) for detecting disturbance based on a state of the vehicle;
second disturbance detection means (1) for detecting disturbance based on the detection result of the speed detection means (4, 5); and
threshold value changing means (1) for changing the threshold value so that determination on the presence of trapping by the determination means (1) becomes difficult; wherein
the threshold value changing means (1) prohibits changing of the threshold value based on the detection of disturbance by the second disturbance detection means (1) if the first disturbance detection means (8, 9) detects the disturbance before the second disturbance detection means (1), and changes the threshold value for a predetermined time based on the detection of disturbance by the second disturbance detection means (1) if the second detection disturbance means (1) detects the disturbance before the first disturbance detection means (8, 9).

2. The opening-and-closing member control device according to claim 1, **characterized in that** the threshold value changing means (1) further changes the threshold value based on the detection of disturbance by the first disturbance detection means (8, 9).

3. An opening-and-closing member control device comprising:
speed detection means (4, 5) for detecting a rotation speed of a motor (3) for driving an opening-and-closing member arranged in a vehicle;
load calculation means (1) for calculating a motor load based on the rotation speed detected by the speed detection means (4, 5); and
determination means (1) for comparing the motor load calculated by the load calculation means (1) and a threshold value, and determining presence of trapping of a foreign material at the opening-and-closing member based on the comparison result;
the opening-and-closing member control device further including,
first disturbance detection means (8, 9) for detecting disturbance based on a state of the vehicle;
second disturbance detection means (1) for detecting disturbance based on the detection result of the speed detection means (4, 5); and
threshold value changing means (1) for changing the threshold value so that determination on the presence of trapping by the determination means (1) becomes difficult; wherein
the threshold value changing means (1) changes the threshold value for a predetermined time if the second disturbance detection means (1) first detects the disturbance while the first disturbance detection means (8, 9) does not detect the disturbance, and prohibits changing of the threshold value if the second disturbance detection means (1) detects the disturbance after the threshold value is changed.

4. The opening-and-closing member control device according to claim 3, further comprising sensitivity changing means (1) for changing detection sensitivity so that the second disturbance detection means (1) easily detects the disturbance; **characterized in that**
the sensitivity changing means (1) changes the detection sensitivity when the first disturbance detection means (8, 9) detects the disturbance.
